# FASCICULE DE BREVET EUROPEEN

(11) **EP 1 608 886 B1**
(45) Date de publication et mention de la délivrance du brevet: **09.08.2006**
(21) Numéro de dépôt: 04742395.9
(22) Date de dépôt: 30.03.2004
(51) Int. Cl.: F16D 65/092

(54) **PLAQUETTES DE FREIN A DISQUE VENTILEES**
BELÜFTETE SCHEIBENBREMSBELÄGE
VENTILATED DISC BRAKE PADS

(30) Priorité: 02.04.2003 FR 0304090
(43) Date de publication de la demande: 28.12.2005
(73) Titulaire: Carbone Lorraine Composants, 92231 Genevilliers (FR)
(72) Inventeur: THEMELIN, Luc, F-95540 Mery Sur Oise (FR); COTTIN, Jean-Claude, F-95250 Beauchamp (FR); MACE, Hervé, F-78150 Le Chesnay (FR); DEPREZ, Delphine, F-92000 Nanterre (FR); LELIEVRE, Loic, F-92700 Colombes (FR)
(74) Mandataire: Fénot, Dominique
(86) Numéro de dépôt international: PCT/FR2004/000794
(87) Numéro de publication internationale: WO 2004/092607

(56) Documents cités:
- EP-A- 0 173 658
- EP-A- 1 046 575
- DE-A- 4 127 113
- DE-U- 9 208 535
- US-A- 4 029 181
- US-A- 4 135 606

## Description

### DOMAINE TECHNIQUE

La présente invention se rapporte aux garnitures de freins à disques, plus précisément aux plaquettes de frein à disque. Les plaquettes sont des éléments de frein à disque disposées en général de part et d'autre du disque, regroupées dans un étrier placé à cheval sur la tranche du disque. Elles sont associées chacune à un ou plusieurs pistons de freinage. Elles sont actionnées par ce ou ces pistons, mus par la pression du liquide de freinage, de telle sorte qu'elle arrivent en contact avec la surface du disque, ce dernier étant typiquement solidaire d'une roue de véhicule ou d'un volant de machine (éolienne, tapis roulant, etc...). Le frottement qui en résulte permet de ralentir la vitesse de rotation de l'ensemble.

### ETAT DE LA TECHNIQUE

Les plaquettes de frein à disque comprennent une garniture qui est un élément d'usure destiné à entrer en contact avec une face du disque et une plaque-support, en général d'un matériau différent, destinée à rendre l'étrier et les plaquettes solidaires. Parfois, notamment pour les garnitures en composite C/C, l'élément destiné à rendre l'étrier et les plaquettes solidaires est une partie de la garniture, usinée dans la masse. Pour des commodités de langage, nous donnerons à cette partie de la garniture comme aux plaques-supports du cas général, le nom commun de "plaque de fixation".

La plaque-support est en général en métal de façon à résister aux efforts mécaniques engendrés par le freinage: elle doit d'une part transmettre - et résister à - la compression exercée par le(s) piston(s) sur la garniture et d'autre part maintenir la plaquette en contact sur le disque malgré des efforts de cisaillement importants exercés par ce dernier sur la plaquette.

Le matériau de la garniture est un matériau de friction, typiquement à base d'un mélange organique (en fait un mélange de poudres de graphite, de céramiques et de copeaux métalliques liées par une résine), à base d'un matériau fritté (mélange de poudres de graphite, de métaux et de céramiques) ou encore un matériau composite de type C/C, tel que celui décrit dans la demande EP 0 581 696. La garniture organique est soit collée sur la plaquette soit moulée directement sur la plaque-support, qui a été préalablement perforée de quelques trous d'ancrage. La garniture frittée est en général brasée sur la plaque-support et la garniture composite C/C est usinée dans la masse.

La diminution de l'énergie cinétique de l'ensemble en rotation nécessite de grands efforts de frottement qui peuvent se traduire par un échauffement intense au niveau du contact entre la garniture et le disque. En se dissipant, l'énergie thermique résultant du freinage provoque des échauffements importants tant au niveau du disque qu'à celui du piston et du liquide de freinage. Ces échauffements peuvent nuire au bon fonctionnement du frein (dégradation du matériau de la garniture, mauvaise étanchéité au contact du piston et de son logement, ébullition et/ou dégradation du liquide de freinage, etc...).

De nombreuses mesures ont déjà été proposées pour diminuer certains de ces inconvénients. Pour ménager le piston et le liquide de refroidissement, on a par exemple cherché à diminuer le flux thermique se dirigeant dans cette direction, en choisissant un matériau de garniture aussi isolant thermiquement que possible (JP 05 171 167), un matériau de plaque-support aussi isolant thermiquement que possible (US 4 230 207, JP 56 147 933), ou encore en ménageant un écran thermique entre la plaque support et le piston (JP 55 139 532, JP 58 156 735, GB 2 129 511, US 3 490 563), entre la garniture et la plaque-support (JP 57 195 935) ou encore entre la plaque -support et une tôle fixée sur la plaque et destinée à être mise en contact avec le piston (GB 2 020 763, US 3 563 347). US-A-4 029 181 décrit une plaquette de frein à disque munie d'une structure dissipatrice de la chaleur.

### PROBLEME POSE

L'introduction d'un écran thermique s'opposant au transfert du flux de chaleur vers le circuit de freinage a le mérite de préserver le piston et le liquide de freinage. Par contre, le disque et la garniture ne sont pas préservés par l'écran thermique. On peut même penser qu'ils subissent des échauffements plus élevés que s'il n'y avait pas d'écran thermique. Il s'en suit que le disque, la garniture de frein et/ou les moyens de fixation de ladite garniture sur la plaque-support se dégradent de façon prématurée.

La demanderesse a donc cherché à mettre au point une plaquette de frein qui, tout en préservant les pistons et le circuit hydraulique de freinage de toute surchauffe intempestive, ne présente pas les inconvénients exposés ci-dessus.

### OBJET DE L'INVENTION

L'objet de l'invention est une plaquette de frein à disque comprenant au moins une garniture de frein possédant au moins une surface plane destinée à entrer en contact frottant sur une face du disque, ladite plaquette de frein étant munie d'une structure dissipatrice de la chaleur orientant le flux de chaleur à dissiper dans au moins une direction sensiblement parallèle au plan de ladite surface frottante, caractérisée en ce que ladite structure dissipatrice de chaleur est ménageé à l'interface entre ladite garniture et ladite plaque support. Cette structure est aménagée dans la plaquette de telle sorte qu'elle conduit le flux de chaleur à dissiper, par conduction et/ou par convection, dans une ou plusieurs directions particulières, sensiblement parallèles au plan de la surface frottante, c'est-à-dire sensiblement perpendiculaires à la direction dans laquelle le piston se déplace.

Cette structure dissipatrice de la chaleur est ménagée dans la plaquette, soit dans la plaque-support, soit dans la garniture, soit dans les deux, par exemple au niveau de leur interface et permet d'augmenter le flux de refroidissement, soit par augmentation de la surface d'échange de la plaquette avec l'air environnant, soit par augmentation de la conductivité thermique dans une ou plusieurs directions sensiblement parallèles à la surface frottante.

L'augmentation de la surface d'échange de chaleur avec l'air environnant peut se faire par exemple en perforant dans la plaque-support et/ou la plaquette des trous oblongs, c'est-à-dire des trous de forme allongée, typiquement en forme de cylindres dont la section n'est pas nécessairement circulaire. Ces trous suivent une ou plusieurs directions sensiblement parallèles à la surface frottante. Ils sont débouchants, de telle sorte que l'air peut librement les traverser. L'augmentation de la surface d'échange peut se faire également en ménageant des protubérances à la périphérie de la plaque-support, lesdites protubérances étant de préférence munies d'ailettes de refroidissement orientées dans la direction de l'air en mouvement. Les deux solutions - perforations + protubérances - peuvent être avantageusement combinées, la plaque-support et la garniture ayant à résister à des contraintes mécaniques élevées et ne pouvant être perforées de façon trop importante.

Les trous débouchants ménagés dans la plaquette sont de préférence des trous cylindriques dont les axes sont sensiblement parallèles au plan de la surface frottante. Lorsque la plaquette de frein est installée sur un véhicule en mouvement, les axes de ces trous sont de préférence sensiblement parallèles à une même direction choisie en fonction du positionnement du frein à disque par rapport au véhicule, plus précisément par rapport à la direction de l'air en mouvement arrivant au voisinage de la plaquette de frein. Autrement dit, on oriente de préférence ces trous dans une direction parallèle à l'arrivée de l'air. Par exemple, en l'absence de déflecteurs, on choisira des trous "radiaux", globalement orientés vers l'axe de rotation du disque si l'étrier est placé au devant de l'axe de rotation de la roue et "orthoradiaux", c'est-à-dire orientés suivant une direction tangentielle à la rotation du disque, si l'étrier est placé au-dessus de l'axe de rotation de la roue.

Ces trous peuvent être des trous cylindriques réalisés dans la masse de la plaque support et/ou de la garniture. Dans ce cas, la réalisation de tels trous par perçage n'étant pas très aisée, les perforations ont de préférence un diamètre aussi important que possible. Il faut dans ce cas vérifier que le diamètre des perforations est compatible avec la résistance que doit nécessairement présenter la plaque-support et/ou la garniture vis-à-vis des fortes sollicitations mécaniques imposées par le freinage.

Les trous peuvent également correspondre à des rainures ménagées sur la surface de la garniture destinée à entrer en contact avec la plaque-support et/ou de rainures ménagées sur la surface de la plaque-support destinée à entrer en contact avec la garniture car le plan de l'une ou l'autre de ces surfaces est en général parallèle à celui de la surface frottante. On peut évidemment ménager des rainures sur les deux surfaces de telle sorte qu'elles se trouvent en vis-à-vis lorsque la garniture et la plaque-support sont assemblées et qu'elles forment ainsi des cavités de plus grande ouverture, plus facilement accessibles à l'air en mouvement. Les rainures présentent l'avantage de pouvoir être réalisées par d'autres moyens que le perçage dans la masse. On peut ainsi réaliser sans trop de difficultés un plus grand nombre de canaux et augmenter la surface d'échange. Avec un plus grand nombre de canaux ayant un diamètre plus faible mais suffisant pour que l'air en mouvement puisse les traverser librement, on obtient un meilleur compromis entre ventilation et résistance mécanique.

La plaque-support peut également présenter des protubérances à sa périphérie. Dans ce cas, ces protubérances sont limitées au volume disponible: il ne faut pas qu'au cours du mouvement de la plaquette imposé par le piston, elles entrent en contact avec le disque ou avec une partie de l'étrier, ou encore avec le logement du piston. De préférence, ces protubérances sont des prolongements de la plaque-support s'étendant sensiblement suivant le plan de la plaque-support à la périphérie de celle-ci. En fonction du volume disponible, on peut équiper ces prolongements d'ailettes qui sont sensiblement perpendiculaires au plan de la plaquette et qui sont orientées suivant une direction sensiblement parallèle à celle de l'air en mouvement au niveau de la plaquette. Le plan de la plaque-support est en effet en général parallèle au plan de la surface frottante et l'augmentation de la masse métallique dans le plan de la plaque-support et vers sa périphérie favorise le transfert d'un flux de chaleur par conduction parallèlement au plan de la surface frottante, ce flux étant d'autant plus important que ces protubérances sont activement refroidies par l'air en mouvement.

L'augmentation de la conductivité thermique dans une ou plusieurs directions sensiblement parallèles au plan de la surface frottante peut se faire par exemple en munissant la garniture de frein et/ou la plaque-support de barreaux en un matériau conduisant mieux la chaleur que le matériau constitutif de la garniture et/ou de la plaque-support qui les enserre. On peut ainsi ménager des trous oblongs dans ladite plaquette et/ou ladite plaque support comme indiqué précédemment puis remplir ces trous avec des barreaux bons conducteurs de la chaleur. Ces trous peuvent être soit perforés dans la masse, soit usinés sous forme de rainures sur la surface qui sert d'interface entre la plaque-support et la garniture. Comme précédemment, plaque-support et garniture peuvent présenter des rainures en vis-à-vis. Les perforations ainsi obtenues sont remplies par des barreaux de forme complémentaire constitués en un matériau bon conducteur de la chaleur, typiquement des barreaux en cuivre. Le refroidissement par l'air ambiant est favorisé par exemple en utilisant des barreaux creux qui traversent de part en part la plaquette. On peut également prolonger ces barreaux de telle sorte que leur longueur dépasse celle des logements ménagés dans la plaquette pour les contenir et les munir d'une protubérance qui offre une surface d'échange améliorée, typiquement des ailettes de refroidissement. Une telle disposition favorise le transfert d'un flux de chaleur par conduction parallèlement au plan de la surface frottante, ce flux étant d'autant plus important que les barreaux sont prolongés par des protubérances activement refroidies par l'air en mouvement.

La structure dissipatrice de la chaleur caractéristique de la présente invention peut avantageusement être combinée aux écrans thermiques de l'art antérieur qui sont destinés plus particulièrement à protéger le cylindre de frein, le liquide de frein et le piston.

Dans le cas d'une plaquette avec garniture en composite C/C, qui ne comporte pas de plaque-support, les trous sont de préférence directement percés dans le matériau composite au voisinage de la face orientée vers le piston.

Un grand nombre de modes de réalisation de l'invention est possible. Nous avons extrait quatre exemples particuliers, décrits ci-après en tant qu'illustrations non limitatives de l'invention.
La figure 1 illustre, en vue de face (a) et en vue de dessus (b), une première plaquette selon l'invention
La figure 2 illustre, en vue de face (a)et en vue de dessus (b), une deuxième plaquette selon l'invention
La figure 3 illustre, en vue de face (a), en vue de dessus (b) et en vue de profil (c), une troisième plaquette selon l'invention, présentant une garniture ayant la même géométrie que celle du premier exemple.
La figure 4 illustre en vue de face (a), en vue de dessus (b) et en vue de profil (c), une quatrième plaquette selon l'invention, présentant une garniture ayant la même géométrie que celle du premier exemple

### Exemples.

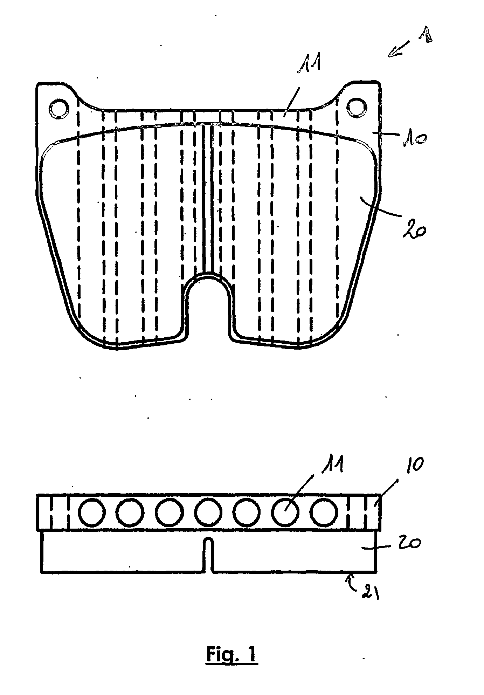

### Exemple 1 - Plaquette possédant une plaque-support perforée (figure 1)

La figure 1 illustre une plaquette **1** de frein à disque comprenant une plaque-support **10** en acier et une garniture de frein **20** frittée qui possède une surface plane **21** destinée à entrer en contact frottant sur une face du disque, appelée surface frottante. La garniture de frein **20** est fixée sur la plaque-support **10** par brasage.

La structure dissipatrice de la chaleur est obtenue en perforant dans la plaque-support **10** des trous **11** suivant une direction sensiblement parallèle à la surface frottante **21.** Ces trous sont débouchants: ils traversent de part en part la plaque-support **10** de telle sorte que l'air peut librement les traverser. Ce sont des trous cylindriques parallèles entre eux et dont l'axe est sensiblement parallèle au plan de la surface frottante. Ces trous sont orientés parallèlement à l'arrivée d'air.

La plaque-support **10** a une épaisseur typique de 8mm et est inscrite dans un rectangle de 80*60 mm environ. Les 7 trous **11** ont un diamètre de 6 mm, ce qui permet à la plaque-support de bien résister autant à la pression exercée par le piston qu'aux forts efforts tangentiels imposés au cours du freinage: la section minimale devant résister aux efforts de cisaillement est encore supérieure à 40% de la section de la plaque-support non perforée.

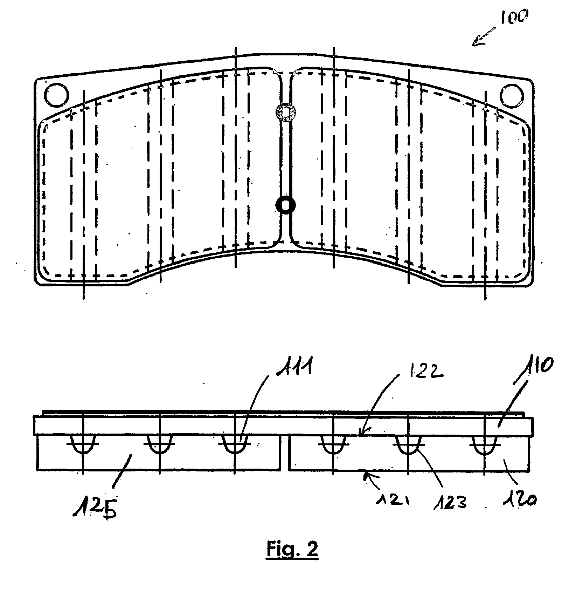

### Exemple 2 - Plaquette présentant une garniture ventilée (figure 2)

La figure 2 illustre une plaquette **100** de frein à disque dont la forme est différente de la précédente. Elle comprend également une plaque-support **110** en acier et deux garnitures de frein **120** et **125** frittées. Les garnitures présentent une surface frottante **121** dont l'étendue totale est environ 70% supérieure à celle de la surface frottante de la garniture de l'exemple 1. Les garnitures de frein **120** et **125** sont fixées sur la plaque-support **110** par brasage.

Dans cet exemple, c'est dans la garniture de frein **120** (ou **125**), ou plus précisément au niveau du contact entre la garniture de frein et la plaque-support que la structure dissipatrice de la chaleur a été aménagée. Des gorges **123** linéaires et parallèles entre elles ont été réalisés sur la surface **122** de la garniture opposée à la surface frottante **121.** suivant une direction sensiblement parallèle à la surface frottanté **121.** Une fois la garniture de frein **120** (ou **125**) assemblée à la plaque-support **110,** les gorges **123** constituent avec la paroi de la plaque support des trous **111** parallèles entre eux , qui traversent la plaquette de part en part de telle sorte que l'air peut librement les traverser. L'axe de ces trous est sensiblement parallèle au plan de la surface frottante **121.** Comme dans l'exemple précédent, ces trous ont une direction générale orientée vers l'entrée d'air de l'étrier.

Les gorges **123** ont une profondeur de l'ordre de 5mm alors que l'épaisseur de la garniture est voisine de 9 mm.

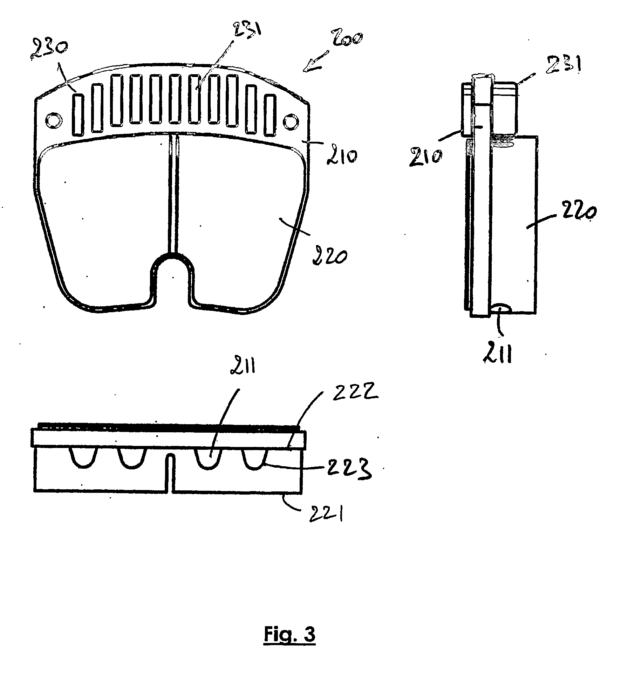

### Exemple 3 - Plaquette présentant une garniture ventilée et une plaque-support ayant une protubérance périphérique munie d'ailettes de refroidissement (figure 3)

La figure 3 illustre une plaquette **200** de frein à disque comprenant une plaque-support **210** en acier et une garniture de frein **220** frittée qui possède une surface frottante **221.** La garniture de frein **220** est fixée sur la plaque-support **210** par brasage.

Comme dans l'exemple précédent, c'est dans la garniture de frein **220,** ou plus précisément au niveau du contact entre la garniture de frein et la plaque-support que la structure dissipatrice de la chaleur a été aménagée. Des gorges **223** linéaires et parallèles entre elles ont été réalisés sur la surface **222** de la garniture opposée à la surface frottante **221.** suivant une direction sensiblement parallèle à la surface frottante **221.** Une fois la garniture de frein **220** assemblée à la plaque-support **210,** les gorges **223** constituent avec la paroi de la plaque support des trous **211** parallèles entre eux , qui traversent la plaquette de part en part de telle sorte que l'air peut librement les traverser. L'axe de ces trous est sensiblement parallèle au plan de la surface frottante **221.** Comme dans les exemples précédents, ces trous ont une direction générale orientée vers l'entrée d'air de l'étrier.

Les gorges **223** ont une profondeur de l'ordre de 6mm alors que l'épaisseur de la garniture est voisine de 13 mm.

L'augmentation de la surface d'échange est également assurée par une protubérance **230** située à la périphérie de la plaque-support **210.** Cette protubérance augmente la masse de la plaque-support de près de 50 %. Cette augmentation est entièrement localisée à la périphérie de la plaque-support, ce qui favorise le refroidissement de la garniture par conduction transversale dans la plaque-support.

Pour augmenter le flux de conduction latérale, la protubérance **230** est munie d'ailettes de refroidissement **231.**

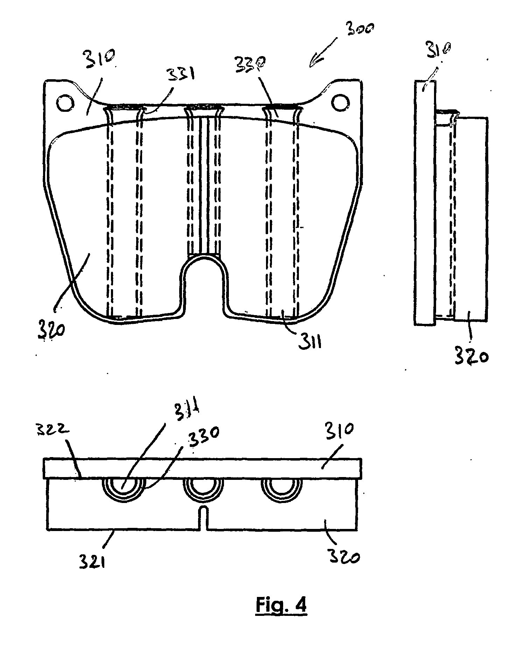

### Exemple 4 - Plaquette présentant une garniture traversée par des barreaux en cuivre (figure 4)

La figure 4 illustre une plaquette **300** de frein à disque comprenant une plaque-support **310** en acier et une garniture de frein **320** frittée qui possède une surface frottante **321.** La garniture de frein **320** est fixée sur la plaque-support **310** par brasage.

La structure dissipatrice de la chaleur est obtenue en ménageant des gorges cylindriques semi-circulaires parallèles sur la surface **322** de la garniture **320** opposée à la surface frottante **321.** Une fois la garniture de frein **320** assemblée à la plaque-support **310,** les gorges constituent avec la paroi de la plaque support **310** des logements destinés à être occupés par des barreaux **330** en cuivre, eux-mêmes cylindriques semi-circulaires, dont le diamètre est ajusté avec celui des gorges de sorte que le contact entre le barreau et la garniture oppose une résistance aux transferts de chaleur par conduction aussi faible que possible.

Dans le cas particulier de cet exemple, les barreaux **330** en cuivre ne sont pas pleins: ce sont des tubes creux qui laissent également l'air traverser librement la plaquette de part en part, au travers des trous **311.** Les barreaux **330** sont prolongés de telle sorte que leur longueur dépasse celle des logements ménagés dans la plaquette. Ils sont illustrés en figure 4 avec une extrémité **331** simplement évasée. On peut imaginer des formes plus complexes, les barreaux étant par exemple réunis par leurs extrémités à une protubérance de forme semblable à celle décrite dans l'exemple 3.

## Revendications

1. Plaquette de frein à disque comprenant au moins une garniture de frein (120, 220, 320) et une plaque-support (110, 210, 310), ladite garniture possédant au moins une surface plane (121, 221, 321) destinée à entrer en contact frottant sur une face du disque, ladite plaquette de frein étant munie d'une structure dissipatrice de la chaleur (111, 211 et 231, 330 et 311) qui conduit le flux de chaleur à dissiper dans au moins une direction sensiblement parallèle au plan de ladite surface frottante, **caractérisée en ce que** ladite structure dissipatrice de chaleur est ménagée à l'interface entre ladite garniture et ladite plaque-support.

2. Plaquette de frein à disque selon la revendication 1 dans laquelle ladite structure dissipatrice de chaleur est ménagée dans ladite garniture et/ou dans ladite plaque-support, à l'interface entre ladite garniture et ladite plaque-support.

3. Plaquette de frein à disque selon la revendication 1 ou 2 dans laquelle la garniture et/ou la plaque-support comporte(nt) des rainures ou des gorges qui forment après mise en place de ladite garniture sur ladite plaque-support des trous (111, 211, 311) dont les axes suivent des directions sensiblement parallèles au plan de la surface frottante (121, 221, 321), ces trous étant débouchants, de telle sorte que l'air peut librement les traverser.

4. Plaquette de frein à disque selon la revendication 3 dans laquelle les axes desdits trous sont parallèles à une même direction qui correspond à la direction de l'air en mouvement au voisinage de ladite plaquette.

5. Plaquette de frein à disque selon l'une quelconque des revendications 1 à 4 dans laquelle ladite structure dissipatrice de la chaleur comprend des protubérances (230) à la périphérie de la plaque-support (210), lesdites protubérances étant de préférence munies d'ailettes (231) de refroidissement.

6. Plaquette de frein à disque selon l'une quelconque des revendications 1 à 5 dans laquelle ladite structure dissipatrice de la chaleur comprend dans ladite garniture et/ou dans ladite plaque-support, à l'interface entre la garniture (320) et la plaque-support (310), des barreaux (330) en un matériau conduisant mieux la chaleur que le matériau constitutif de la (ou des) pièce(s) (320) qui les enserre(nt).

7. Plaquette de frein à disque selon la revendication 6 dans laquelle lesdits barreaux (330) occupent les logements ménagés par lesdits trous (111, 211, 311) réalisés à l'interface desdites garniture et plaque-support.

8. Plaquette de frein à disque selon la revendication 6 ou 7 dans laquelle lesdits barreaux (330) sont creux et délimitent des trous débouchants (311) de telle sorte que l'air peut librement les traverser.

9. Plaquette de frein à disque selon l'une quelconque des revendications 6 à 8 dans laquelle la longueur desdits barreaux (330) dépasse celle des logements ménagés dans la plaquette pour les contenir.

10. Plaquette de frein à disque selon la revendication 9 dans laquelle lesdits barreaux (330) sont munis d'une protubérance qui offre une surface d'échange améliorée, typiquement des ailettes de refroidissement.

11. Plaquette de frein à disque selon l'une quelconque des revendications 1 à 10 comprenant également une tôle servant d'écran thermique protecteur du cylindre de frein, du liquide de frein et du piston, ladite tôle étant placée typiquement entre la plaque-support et le piston, entre la garniture et la plaque-support ou encore entre la plaque -support et une tôle fixée sur la plaque-support et destinée à être mise en contact avec le piston.

## Claims

1. Disk brake pad comprising at least one brake lining (120, 220, 320) and a support plate (110, 210, 310), the said lining having at least one plane surface (121, 221, 321) that will come into friction contact with one face of the disk, the said brake pad being provided with a heat dissipating structure (111, 211 and 231, 339 and 311) that conducts the heat flux to be dissipated in at least one direction substantially parallel to the plane of the said friction surface, **characterised in that** the said heat dissipating structure is formed at the interface between the said lining and the said support plate.

2. Disk brake pad set forth in claim 1 wherein the said heat dissipating structure is formed in the said lining and / or in the said support plate at the interface between the said lining and the said support plate.

3. Disk brake pad set forth in either claim 1 or 2 wherein the lining and / or the support plate comprise(s) grooves or keyways that are formed after the said lining has been put into place onto the said support plate of holes (11, 211, 311) with centre lines running along directions substantially parallel to the plane of the friction surface (121, 221, 321), these holes opening up such that air can pass through them freely.

4. Disk brake pad set forth in claim 3 wherein the centre lines of the said holes are all parallel to each other along the direction corresponding to the direction of moving air close to the said brake pad.

5. Disk brake pad set forth in any of claims 1 to 4, wherein the said heat dissipating structure comprises protuberances (230) at the periphery of the support plate (210), the said protuberances preferably being provided with cooling fins (231).

6. Disk brake pad set forth in any of claims 1 to 5, wherein the said heat dissipating structure comprises bars (330) made of a material conducting heat better than the material from which the part(s) (320) that clamp(s) them are made, in the said lining and / or the said support plate at the interface between the lining (320) and / or in the support plate (310).

7. Disk brake pad set forth in claim 6, wherein the said bars (330) occupy housings formed by the said holes (111, 222, 311) formed at the interface of the said lining and support plate.

8. Disk brake pad set forth in either claim 6 or 7 wherein the said bars (330) are hollow and delimit through holes (311) such that air can pass through them freely.

9. Disk brake pad set forth in any of claims 6 to 8 wherein the said bars (330) are longer than the housings formed in the pad to contain them.

10. Disk brake pad set forth in claim 9, wherein the said bars (330) are provided with a protuberance with an improved exchange surface, typically cooling fins.

11. Disk brake pad set forth in any of claims 1 to 10, also comprising a sheet metal acting as a thermal shield protecting the brake cylinder, brake fluid and the piston, the said sheet metal typically being placed between the support plate and the piston, between the lining and the support plate or between the support plate and a piece of sheet metal fixed on the support plate and that will be brought into contact with the piston.

## Patentansprüche

1. Scheibenbremsbelag mit mindestens einem Bremsbelag (120, 220, 320) und einer Trägerplatte (110, 210, 310), welcher Belag mindestens eine ebene Fläche (121, 221, 321) besitzt, die auf einer Seite der Scheibe in reibenden Kontakt kommen soll, wobei der Bremsbelag mit einer wärmeabführenden Struktur (111, 211 und 231, 330 und 311) versehen ist, die den abzuführenden Wärmefluss in mindestens eine, im Wesentlichen parallele Richtung zur Ebene der Reibfläche weiterleitet, **dadurch gekennzeichnet, dass** die wärmeabführende Struktur an der Grenzfläche zwischen dem Belag und der Trägerplatte angeordnet ist.

2. Scheibenbremsbelag nach Anspruch 1, bei dem die wärmeabführende Struktur im Belag und/oder in der Trägerplatte an der Grenzfläche zwischen dem Belag und der Trägerplatte angeordnet Ist.

3. Scheibenbremsbelag nach Anspruch 1 oder 2, bei dem der Belag und/oder die Trägerplatte Nuten oder Rillen aufweisen, die nach Aufbringen des Belags auf die Trägerplatte Öffnungen (111, 211, 311) bilden, deren Achsen im Wesentlichen parallelen Richtungen zur Ebene der Reibfläche (121, 221, 321) folgen, wobei diese Öffnungen durchgehend sind, so dass die Luft ungehindert durch sie hindurchströmen kann.

4. Scheibenbremsbelag nach Anspruch 3, bei dem die Achsen der Öffnungen parallel zu einer Richtung liegen, die der Richtung der bewegten Luft in der Nähe des Belags entspricht.

5. Scheibenbremsbelag nach irgendeinem der Ansprüche 1 bis 4, bei dem die wärmeabführende Struktur Vorsprünge (230) am Umfang der Trägerplatte (210) aufweist, wobei die Vorsprünge vorzugsweise mit Kühlrippen (231) versehen sind.

6. Scheibenbremsbelag nach irgendeinem der Ansprüche 1 bis 5, bei dem die wärmeabführende Struktur im Belag und/oder in der Trägerplatte an der Grenzfläche zwischen dem Belag (320) und der Trägerplatte (310) Stäbe (330) aus einem Werkstoff aufweist, der die Wärme besser leitet als der Werkstoff des (oder der) sie umschließenden Teils (oder Teile) (320).

7. Scheibenbremsbelag nach Anspruch 6, bei dem die Stäbe (330) die durch die Öffnungen (111, 211, 311) ausgesparten Aufnahmeräume belegen, die an der Grenzfläche zwischen Belag und Trägerplatte ausgebildet sind.

8. Scheibenbremsbelag nach Anspruch 6 oder 7, bei dem die Stäbe (330) hohl sind und Durchgangsöffnungen (311) abgrenzen, so dass die Luft ungehindert durch sie hindurchströmen kann.

9. Scheibenbremsbelag nach irgendeinem der Ansprüche 6 bis 8, bei dem die Länge der Stäbe (330) die Länge der im Belag zu ihrer Aufnahme ausgesparten Aufnahmeräume überschreitet.

10. Scheibenbremsbelag nach Anspruch 9, bei dem die Stäbe (330) mit einem eine verbesserte Austauschfläche bietenden Vorsprung, typischerweise mit den Kühlrippen versehen sind.

11. Scheibenbremsbelag nach irgendeinem der Ansprüche 1 bis 10, welcher zusätzlich ein Blech aufweist, das als Wärmeschild zum Schutz des Bremszylinders, der Bremsflüssigkeit und des Kolbens dient, wobei das Blech typischerweise zwischen der Trägerplatte und dem Kolben, zwischen dem Belag und der Trägerplatte oder auch zwischen der Trägerplatte und einem Blech angeordnet ist, welches an der Trägerplatte befestigt ist und mit dem Kolben in Kontakt gebracht werden soll.
